(19) Europäisches Patentamt
European Patent Office
Office européen des brevets

(11)   EP 2 728 128 A1

(12)   EUROPÄISCHE PATENTANMELDUNG

(43) Veröffentlichungstag:
      07.05.2014  Patentblatt 2014/19

(51) Int Cl.:
     *F01D 21/00* (2006.01)      *G01H 1/00* (2006.01)

(21) Anmeldenummer: 12190744.8

(22) Anmeldetag: 31.10.2012

(84) Benannte Vertragsstaaten:
     AL AT BE BG CH CY CZ DE DK EE ES FI FR GB
     GR HR HU IE IS IT LI LT LU LV MC MK MT NL NO
     PL PT RO RS SE SI SK SM TR
     Benannte Erstreckungsstaaten:
     BA ME

(71) Anmelder: Siemens Aktiengesellschaft
     80333 München (DE)

(72) Erfinder:
     • Jakielski, Sebastian
       46238 Bottrop (DE)
     • Obermayr, Stefan
       45475 Mülheim (DE)

(54)   **Messverfahren zur Schadenserkennung an einer Turbinenschaufel und Turbine**

(57)     Die Erfindung betrifft ein Messverfahren (11) zur Früherkennung eines Schadens an einer Schaufel (26) eines Schaufelrads einer Turbine (10). Erfindungsgemäß werden während eines Betriebs der Turbine (10) in einer Rotationsrichtung (17) der Schaufel (26) entlang eines das Schaufelrad umgebenden Umfangs (24) an mehreren Stellen jeweils mehrere Magnetfelder im Wesentlichen in einer Schwingungsrichtung (18) der Schaufel (26) nebeneinander erzeugt (31), die von einer Spitze (15) eines Schaufelblatts (14) der Schaufel (26) beim Durchqueren beeinflusst werden. Durch die Beeinflussung an den mehreren Stellen werden Positionswerte (19) der Spitze (15) erfasst (32). Aus den Positionswerten (19) wird dann ein Positionsverlauf (20) des Schaufelblatts (14) gebildet (33) und aus dem Positionsverlauf (20) eine Frequenz (22) ermittelt (34). Diese Frequenz (22) wird mit bestimmten Frequenzwerten verglichen (35). Bei einer plötzlichen und/oder starken Änderung der Frequenz (22) wird ein Alarmereignis (23) erkannt (36). Zudem wird eine Turbine (10) beansprucht, die ausgebildet ist, das erfindungsgemäße Messverfahren (11) auszuführen.

FIG 1

FIG 3

**Beschreibung**

Die vorliegende Erfindung betrifft ein Messverfahren zur Früherkennung eines Schadens an einer Schaufel eines Schaufelrads einer Turbine sowie eine Turbine.

Es ist bekannt, Schaufeln einer Turbine mittels Wirbelstromprüfung auf Schäden zu untersuchen. Dabei werden die Sonden direkt auf dem Werkstück verfahren um kleinste Risse zu detektieren.

Eine derartige Untersuchung ist aufgrund des direkten Kontakts zwischen den Sonden und der Schaufel nicht während eines Betriebs der Turbine möglich. Während des Betriebs auftretende Schäden können somit frühestens im darauffolgenden Prüfintervall nach Beendigung des Betriebs festgestellt werden.

Der vorliegenden Erfindung liegt die Aufgabe zugrunde, ein verbessertes Messverfahren sowie eine Turbine, welche derart ausgebildet ist dieses Messverfahren durchzuführen, bereitzustellen.

Gelöst wird diese Aufgabe mit einem Verfahren nach Anspruch 1 sowie einer Turbine nach Anspruch 6. Vorteilhafte Weiterbildungen der Erfindung sind in den Unteransprüchen angegeben und in der Beschreibung beschrieben.

In dem erfindungsgemäßen Messverfahren zur Früherkennung eines Schadens an einer Schaufel eines Schaufelrads einer Turbine werden während eines Betriebs der Turbine in einer Rotationsrichtung der Schaufel entlang eines das Schaufelrad umgebenden Umfangs an mehreren Stellen jeweils mehrere Magnetfelder im Wesentlichen in einer Schwingungsrichtung der Schaufel nebeneinander erzeugt, die von einer Spitze eines Schaufelblatts der Schaufel beim Durchqueren beeinflusst werden. Durch die Beeinflussung an den mehreren Stellen werden Positionswerte der Spitze erfasst. Aus den Positionswerten wird dann ein Positionsverlauf des Schaufelblatts gebildet und aus dem Positionsverlauf eine Frequenz ermittelt. Diese Frequenz wird mit bestimmten Frequenzwerten verglichen. Bei einer plötzlichen und/oder starken Änderung der Frequenz wird ein Alarmereignis erkannt.

Das vorgestellte Messverfahren zeigt eine Möglichkeit auf, wie während des Betriebs, insbesondere einer Dampfturbine, an den freistehenden Endschaufeln eine permanente Echtzeit-Schwingungsmessung implementiert werden kann und bietet einen effektiven Schutz vor Turbinenschäden.

Es ist vorteilhaft möglich, bei Voranschreiten eines Risses im Schaufelfuß, jedoch noch deutlich vor einem Abriss des Schaufelblatts, eine Frequenzänderung an der betreffenden Schaufel festzustellen und daraufhin frühzeitig die Turbine abzuschalten um effektiv größere Schäden zu verhindern.

Die dargestellte Lösung umfasst sowohl eine Messung an allen leitfähigen als auch an permeablen Schaufeln. Auch Schaufeln aus Titan oder Aluminium sind überprüfbar. Eine flüchtige Magnetisierung der Schaufel ist nicht erforderlich.

Zudem können gleichzeitig Auswirkungen von veränderlichen Betriebsparametern auf die Schaufeln erfasst und dargestellt werden.

Darüber hinaus trägt das erfindungsgemäße Verfahren in seiner Anwendung zu einem höheren Vertrauen in die Turbinentechnik bei.

In einer vorteilhaften Ausführung des erfindungsgemäßen Messverfahrens werden die Positionswerte in eine Sinuskurve als Positionsverlauf überführt.

Damit ist eine die Wellenlänge beziehungsweise die Frequenz des Positionsverlaufs leicht zu bestimmen. Die Werte für die zu überprüfende Frequenz können schnell ermittelt werden.

In einer weiteren vorteilhaften Ausführung des erfindungsgemäßen Messverfahrens werden die Schaufeln zyklisch nacheinander überprüft.

Damit werden auf einfache Weise alle Schaufeln eines Schaufelrads regelmäßig einer Überprüfung unterzogen. Der Zyklus ist dabei so kurz, dass zwischen zwei Prüfungen kein Versagen einer Schaufel auftreten kann.

In einer weiteren vorteilhaften Ausführung des erfindungsgemäßen Messverfahrens werden die bestimmten Frequenzwerte aus den bereits ermittelten Frequenzen der Schaufel bestimmt.

Damit werden unterschiedliche Schwingungseigenschaften der einzelnen Schaufeln beim Erkennen eines Alarmereignisses mit berücksichtigt. Das Messverfahren wird dadurch genauer. Fehlmeldungen können damit vermieden werden.

In einer weiteren vorteilhaften Ausführung des erfindungsgemäßen Messverfahrens werden die bestimmten Frequenzen aus einem vordefinierten Frequenzbereich bestimmt.

Damit stehen schon vor einer ersten Inbetriebnahme der Turbine Werte zum Abgleich zur Verfügung. Die Einsatzsituationen des Messverfahrens werden damit erweitert.

Die erfindungsgemäße Turbine mit einem Diffusor und einem im Diffusor angeordneten und mehrere Schaufeln aufweisenden Schaufelrad umfasst erfindungsgemäß in einer Rotationsrichtung der Schaufeln entlang eines das Schaufelrad umgebenden Umfangs an mehreren Stellen Messflächen. Diese Messflächen weisen jeweils zumindest eine Erregerspule und mehrere im Wesentlichen in einer Schwingungsrichtung der Schaufel nebeneinander angeordnete Sonden auf, die mit einer Auswerteeinheit verbindbar sind. Die Sonden sind insbesondere Wirbelstromsonden. Und die erfindungsgemäße Turbine ist insbesondere eine Dampfturbine.

Vorteilhaft ist damit eine Turbine zur Ausführung des erfindungsgemäßen Messverfahrens bereitgestellt. Die erfindungsgemäße Turbine weist eine erhöhte Betriebssicherheit auf. Unfälle durch Schäden an den Schaufeln können vermieden werden. Damit sind die Turbine selbst und ihre Umgebung geschützt.

Die Sonden stehen dabei nicht hervor und beeinflussen nicht den Strömungsfluss. Es wird eine robuste und langlebige Vorrichtung mit einem hohem Auflösungsvermögen und der Möglichkeit der permanenten Online-Überwachung bereitgestellt.

In einer vorteilhaften Ausgestaltung der erfindungsgemäßen Turbine sind die Messflächen gleichmäßig über den gesamten Umfang verteilt angeordnet.

Damit können Daten über das Schwingungsverhalten der Schaufeln über den gesamten Umfang ermittelt werden. Es stehen mehr Daten zur Auswertung zur Verfügung. Bei Messungen am gesamten Umfang können zudem bei sich nicht in einer vertikalen Achse drehenden Schaufelrädern Auswirkungen der Schwerkraft auf das Schwingungsverhalten einzelner Schaufeln ergründet werden.

In einer weiteren vorteilhaften Ausgestaltung der erfindungsgemäßen Turbine weisen die Messflächen jeweils mehrere Reihen von nebeneinander angeordneten Sonden auf. Insbesondere sind die mehreren Reihen dabei zueinander in einer Richtung angeordnet, die senkrecht zu der Schwingungsrichtung der Schaufel verläuft.

Damit kann zur Erfassung der Position auf redundante Daten zurückgegriffen werden. Die Positionserfassung der Spitzen der Schaufelblätter kann dadurch sicherer durchgeführt werden.

In einer weiteren vorteilhaften Ausgestaltung der erfindungsgemäßen Turbine weist diese eine Wasserkühlung an den Messflächen auf.

Damit ist eine effektive Kühlung der Messflächen ermöglicht, die die Messflächen in eine günstigere Betriebstemperatur versetzen und damit die Funktionsdauer der Messflächen erhöhen kann.

Beispielhafte Ausführungen der Erfindung werden anhand der Zeichnungen und der nachfolgenden Beschreibung näher erläutert. Es zeigen:

Figur 1    eine Messfläche einer erfinderischen Turbine,

Figur 2    eine Anordnung mehrerer Messflächen in der Turbine,

Figur 3    die Messflächen über einem Schaufelblatt der Turbine,

Figur 4    einen Positionsverlauf eines Schaufelblatts,

Figur 5    Frequenzverläufe zweier Schaufelblätter und

Figur 6    ein erfinderisches Messverfahren.

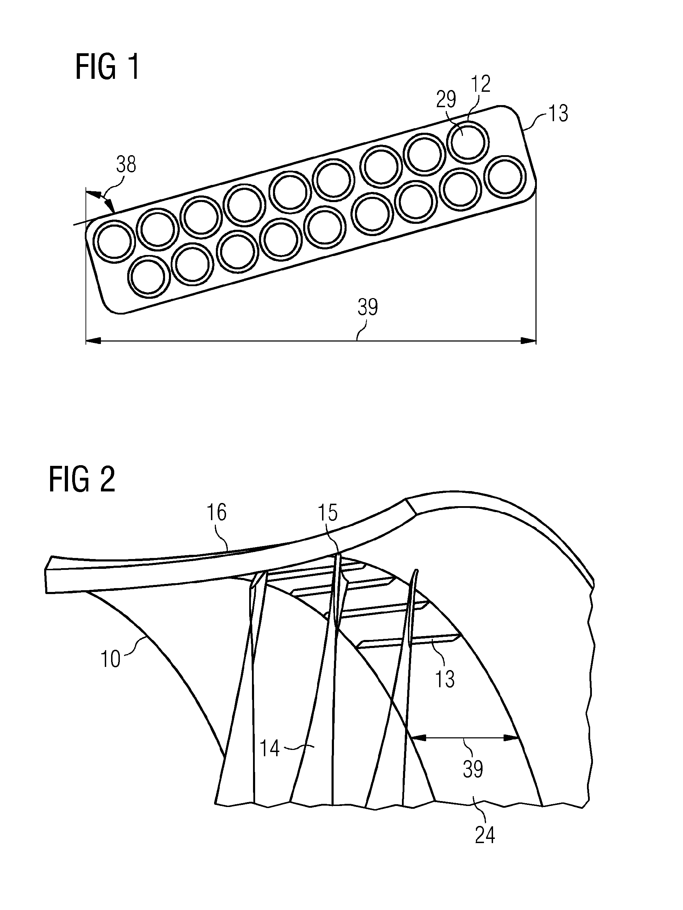

In der Figur 1 ist in einer Skizze beispielhaft eine Messfläche 13 einer erfinderischen Turbine 10 gezeigt. Die Messfläche 13 umfasst mehrere nebeneinander angeordnete Sonden 12, die insbesondere in mehreren Reihen angeordnet sind. Insbesondere sind in den Sonden 12 Erregerspulen 29 zum Erzeugen jeweils eines veränderlichen Magnetfelds integriert. Die Sonde 12 ist insbesondere eine zum Detektieren von Wirbelströmen.

Die abgebildete Messfläche 13 umfasst achtzehn Sonden 12. Erfindungsgemäß kann die Anzahl der Sonden 12 in einer Messfläche 13 auch mehr oder weniger als achtzehn betragen.

Die Messfläche 13 weist je nach Schaufeltyp eine Messbreite 39 auf, die über die Breite der Schwingungsamplitude plus Schaufelblattbreite hinausgeht. Eine Schrägstellung 38 der Messfläche 13 wird in Abhängigkeit einer Schwingungsrichtung 18 der Schaufel ausgelegt. Der Abstand der einzelnen Sonden 12 zueinander wird ebenfalls in Abhängigkeit der Schwingungsamplitude ausgelegt. Auch die Form des Diffusors 16, in dem die Messfläche 13 angeordnet werden soll, wird mit berücksichtigt.

Als Erregerspulen 29 sind relativ kleine Exemplare vorgesehen, beispielsweise mit einem Durchmesser von 0,5 mm bis 2 mm, um eine im Magnetfeld befindliche, permeable oder elektrisch leitfähige Schaufel 26 zu detektieren.

Bei der hier beschriebenen Erfindung wird die Eigenschaft verwendet, dass sich das sogenannte "Lift Off Signal" auf der Impedanzebene bewegt, wenn sich ein leitfähiges oder permeables Prüfobjekt im Wirkbereich des Magnetfeldes befindet.

Je nach Frequenz, ca. 20Hz bis 2MHz, und Durchmesser der Erregerspulen 29 kann die Schaufel 26 als Prüfobjekt noch einige mm von den Sonden 12 entfernt detektiert werden. Dieser Abstand kann durch bekannte Techniken, wie beispielsweise magnetische Schirmung und Ferritkern, noch vergrößert werden.

In der Figur 2 ist in einer Skizze beispielhaft eine Anordnung mehrerer Messflächen 13 in einem Diffusor 16 einer erfindungsgemäßen Turbine 10 dargestellt.

Die Messflächen 13 sind fest im Diffusor 16, direkt über Spitzen 15 von Schaufelblättern 14 der Schaufeln 26 angeordnet. Die Messflächen 13 sind insbesondere in gleichmäßigen Abständen in einem Umfang 24 des Diffusors 16 positioniert, der eine die Schaufeln 26 umgebende Innenseite des Diffusors 16 bildet.

Die Messflächen 13 weisen dabei eine Messbreite 39 auf, die größer ist als eine Dicke der Schaufelblätter 14 plus ihrer axialen Schwingungsamplitude. So ist es möglich eine axiale Lagebestimmung der Spitze mit einer Genauigkeit von etwa 0,5 mm bis 1 mm vorzunehmen.

Um eine Frequenz 22 des Schaufelblatts 14 messen zu können, ist es nötig mehrere der Messflächen 13 am Umfang 24 verteilt anzuordnen. Diese werden im Messverfahren 11 drehzahlsynchron hintereinander angesteuert.

Der Abstand zwischen den einzelnen Messflächen 13 ist abhängig von der Frequenz der Erregerspule 29, der Länge des Umfangs 24 sowie von der Eigenschwingung der Schaufel 26. Eine Beispielrechnung zeigt für eine Erregerfrequenz von 25 Hz, einen Umfang von 21 m und eine Eigenschwingung der Schaufel 26 von 150 Hz bei 5 Messpunkten einen Abstand von 0,7 m pro Messfläche 13:

$$25 \text{Hz} * 21\text{m} = 525 \text{ m/s}$$

$$525 \text{ m/s} / 150 \text{ Hz} = 3{,}5 \text{ m Wellenlänge}$$

$$3{,}5\text{m} / 5 \text{ Messpunkte} = 0{,}7\text{m Abstand}$$

Die erfindungsgemäße Turbine 10 weist für die einzelnen Messflächen 13 Durchgangstaschen im Diffusor 16 auf. Diese Durchgangstaschen können auch nachträglich eingebracht werden, wenn eine Turbine mit Messflächen 13 nachgerüstet werden soll. Zudem weist die erfindungsgemäße Turbine 10 Datenleitungen auf, die die Sonden 12 mit einer Auswerteeinheit verbinden.

Optional kann die erfindungsgemäße Turbine 10 eine Wasserkühlung aufweisen, mit der die Erregerspulen 29 effektiv gekühlt werden können. So kann eine lange Lebensdauer der Erregerspulen 29 erreicht werden.

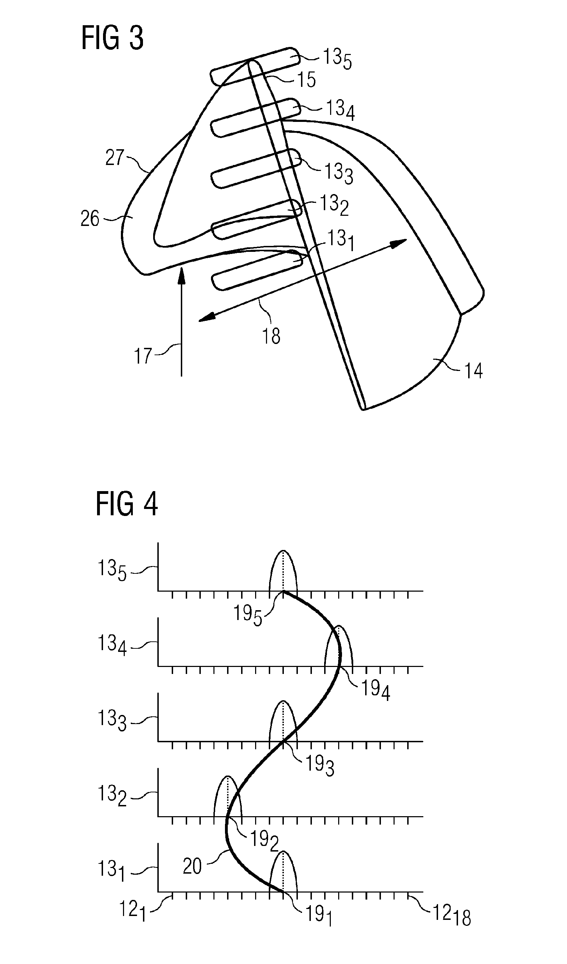

Die Figur 3 zeigt in einer Skizze beispielhaft die Anordnung mehrerer Messflächen 13 über einer Schaufel 26 in einer Draufsicht. Der Diffusor 16 ist in dieser Darstellung ausgeblendet.

Das auf einem Schaufelfuß 27 angeordnete Schaufelblatt 14 bewegt sich im Betrieb der Turbine 10 in Rotationsrichtung 17 und schwingt dabei in einer Schwingungsrichtung 18.

Entlang der Rotationsrichtung 17 sind hier beispielhaft die Messflächen $13_1$ bis $13_5$ dargestellt. Die Messflächen 13 sind parallel zur Schwingungsrichtung 18 angeordnet. Sie weisen die gleiche Schrägstellung 38 gegenüber einer Drehachse des Schaufelrads auf wie die Schwingungsrichtung 18. Ihre Messbreit 39 ragt über die Breite der Schwingungsamplitude plus Schaufelblattbreite hinaus.

Bei einer Drehung des Schaufelrads der Turbine 10 durchquert das Schaufelblatt 14 mit seiner Spitze 15 nacheinander die verschiedenen Messflächen $13_1$ bis $13_5$. In der Figur 3 durchquert die Spitze 15 gerade die Messfläche $13_5$. Durch die Schwingung des Schaufelblatts 14 durchquert die Spitze 15 die verschiedenen Messflächen 13 an unterschiedlichen Stellen der Messbreite 39. Das wird durch die Sonden 12 der Messflächen 13 an diesen Stellen erfasst 32, woraus sich hier im Beispiel fünf Positionswerte 19 für die Spitze 15 der Schaufel 26 ergeben.

Die Messflächen $13_1$ bis $13_5$ werden insbesondere drehzahlsynchron zum Schaufelrad hintereinander angesteuert um von jeweils einer bestimmten Schaufel 26 die umfangsabhängige Positionsänderung der Spitze 15, beispielsweise an der Dampfeintrittskante zu ermitteln.

Die Umfangsposition muss an einer beliebigen Stelle des Läufers abgenommen werden um positionsgenau die Schaufeln stroboskopartig messen zu können.

Aus den fünf Positionswerten 19 der Schaufel 26 an den fünf Messflächen $13_1$ bis $13_5$ wird von einer Auswerteeinheit ein Positionsverlauf 20 gebildet 33. Ein solcher Positionsverlauf 20 ist beispielhaft in der Figur 4 dargestellt.

Dabei werden die Positionswerte $19_1$ bis $19_5$ für die fünf verschiedenen Messflächen $13_1$ bis $13_5$ der Reihe nach abgebildet. Die Positionswerte $19_1$ bis $19_5$ werden hier beispielhaft von achtzehn Sonden $12_1$ bis $12_{18}$ je Messfläche 13 erfasst 32. Die Positionswerte $19_1$ bis $19_5$ werden von der Auswerteeinheit insbesondere in eine Sinusfunktion umgewandelt. Aus dieser wird eine Wellenlänge der Schwingung und daraus mathematisch eine Frequenz 22 für die Schaufel 26 ermittelt 34. Das Messergebnis wird dabei mit zunehmender Dichte an Messpunkten genauer.

Die Frequenz 22 jeder Schaufel 26 wird auf diese Weise nacheinander zyklisch überwacht. Bei großen Rissen im Schaufelfuß 27 verändert sich die Frequenz 22 der Schaufel um einige Hz, was sich über die erfindungsgemäße Technik leicht abbilden lässt. Dazu werden die ermittelten Frequenzen 22 über eine Zeit 21 beobachtet.

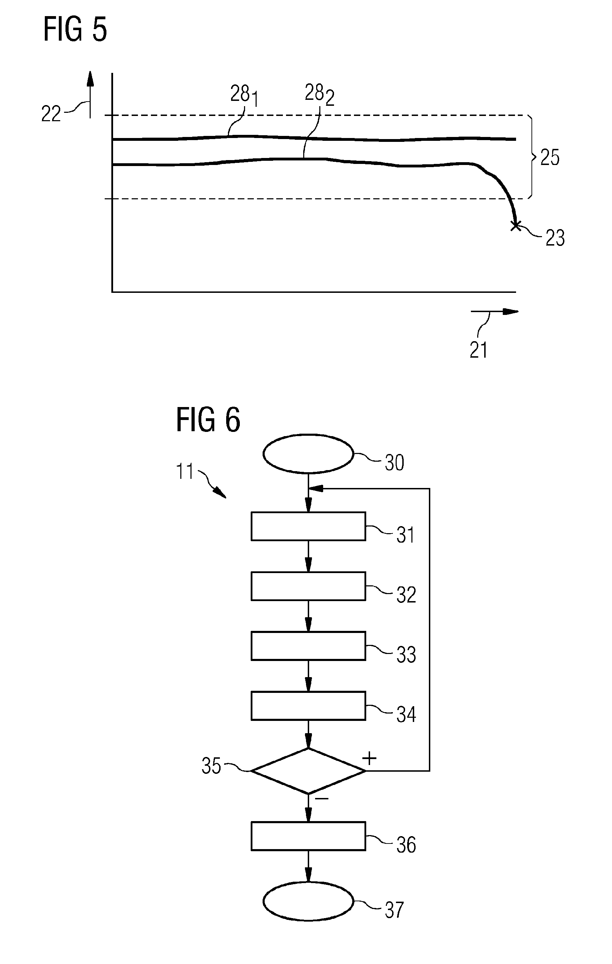

Die Figur 5 zeigt beispielhaft die über die Zeit 21 abgebildeten Frequenzen 22 in einem Frequenzverlauf 28. Gezeigt sind hier beispielhaft zwei Frequenzverläufe $28_1$ und $28_2$ von zwei verschiedenen Schaufeln 26. Erfindungsgemäß werden insbesondere die Frequenzen 22 aller Schaufeln 26 überwacht.

Die erhaltenen Frequenzen 22 werden mit bestimmten Frequenzwerten verglichen 35. Diese Frequenzwerte können beispielsweise aus den bisherigen Werten der Schaufel gewonnen werden und/oder die bestimmten Frequenzwerte sind vordefinierte Werte eines bestimmten Frequenzbereichs 25. Bei einer plötzlichen und/oder deutlichen Änderung der Frequenz 22 an einer der Schaufeln 26 wird ein Alarmereignis 23 erkannt 36 und ein Alarm ausgegeben, bzw. die Turbine 10 kontrolliert heruntergefahren. In der Figur 5 tritt in dem unteren Frequenzverlauf $28_2$ ein derartiges Alarmereignis 23 auf.

Die Figur 6 zeigt beispielhaft ein erfindungsgemäßes Messverfahren 11 in einem Flussdiagramm von einem Start 30 bis zu einem Ende 37. In einem ersten Schritt werden Magnetfelder erzeugt 31. Durch die die Magnetfelder an einer bestimmten Stelle durchquerenden Spitze 15 der Schaufel 26 werden bestimmte Magnetfelder beeinflusst und die Positionswerte 19 der Spitze 15 werden erfasst 32. Aus den Positionswerten 19 bildet 33 die Auswerteeinheit den Positionsverlauf 20 und ermittelt 34 die Frequenz 22 des Positionsverlaufs 19. Die erhaltene Frequenz 22 wird anschließend mit bestimmten Frequenzwerten verglichen 35. Auf diese Weise werden alle Schaufeln 26 der Turbine 10 zyklisch nacheinander kontrolliert. Weicht die erhaltene Frequenz 22 von den bestimmten Frequenzwerten ab, wird ein Alarmereignis 23 erkannt 36. Dieses kann als Startsignal für weitere Sicherheitsmaßnahmen, wie beispielsweise eine Turbinenabschaltung, verwendet werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Messverfahren (11) zur Früherkennung eines Schadens an einer Schaufel (26) eines Schaufelrads einer Turbine (10), **dadurch gekennzeichnet, dass** während eines Betriebs der Turbine (10)

   - in einer Rotationsrichtung (17) der Schaufel (26) entlang eines das Schaufelrad umgebenden Umfangs (24) an mehreren Stellen jeweils mehrere Magnetfelder im Wesentlichen in einer Schwingungsrichtung (18) der Schaufel (26) nebeneinander erzeugt (31) werden, die von einer Spitze (15) eines Schaufelblatts (14) der Schaufel (26) beim Durchqueren beeinflusst werden,
   - durch die Beeinflussung an den mehreren Stellen Positionswerte (19) der Spitze (15) erfasst (32) werden,
   - aus den Positionswerten (19) ein Positionsverlauf (20) des Schaufelblatts (14) gebildet (33) wird,
   - aus dem Positionsverlauf (20) eine Frequenz (22) ermittelt (34) wird,
   - die Frequenz (22) mit bestimmten Frequenzwerten verglichen (35) wird und
   - bei einer plötzlichen und/oder starken Änderung der Frequenz (22) ein Alarmereignis (23) erkannt (36) wird.

2. Messverfahren (11) nach Anspruch 1, bei dem die Positionswerte (19) in eine Sinuskurve als Positionsverlauf überführt werden.

3. Messverfahren (11) nach Anspruch 1 oder 2, bei dem die Schaufeln (26) zyklisch nacheinander überprüft werden.

4. Messverfahren (11) nach einem der Ansprüche 1 bis 3, bei dem die bestimmten Frequenzwerte aus den bereits ermittelten Frequenzen (22) der Schaufel (26) bestimmt werden.

5. Messverfahren (11) nach einem der Ansprüche 1 bis 4, bei dem die bestimmten Frequenzen aus einem vordefinierten Frequenzbereich (25) bestimmt werden.

6. Turbine (10) mit einem Diffusor (16) und einem im Diffusor (16) angeordneten und mehrere Schaufeln (26) aufweisenden Schaufelrad, **dadurch gekennzeichnet, dass** die Turbine (10) in einer Rotationsrichtung (17) der Schaufeln (26) entlang eines das Schaufelrad umgebenden Umfangs (24) an mehreren Stellen Messflächen (13) umfasst, wobei die Messflächen (13) jeweils zumindest eine Erregerspule (29) und mehrere im Wesentlichen in einer Schwingungsrichtung (18) der Schaufel (26) nebeneinander angeordnete Sonden (12) aufweisen, die mit einer Auswerteeinheit verbindbar sind.

**7.** Turbine (10) nach Anspruch 6,
wobei die Messflächen (13) gleichmäßig über den gesamten Umfang (24) verteilt angeordnet sind.

**8.** Turbine (10) nach Anspruch 6 oder 7,
wobei die Messflächen (13) jeweils mehrere Reihen von nebeneinander angeordneten Sonden (12) aufweisen.

**9.** Turbine (10) nach Anspruch 8,
wobei die mehreren Reihen zueinander in einer Richtung angeordnet sind, die senkrecht zu der Schwingungsrichtung (18) der Schaufel (26) verläuft.

**10.** Turbine (10) nach einem der Ansprüche 6 bis 9,
wobei die Turbine (10) eine Wasserkühlung an den Messflächen (13) aufweist.

FIG 1

FIG 2

FIG 3

FIG 4

## FIG 5

## FIG 6

Europäisches
Patentamt

European
Patent Office

Office européen
des brevets

**EUROPÄISCHER RECHERCHENBERICHT**

Nummer der Anmeldung

EP 12 19 0744

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 2 312 410 A1 (STARMAN STANISLAV [CZ]) 20. April 2011 (2011-04-20) * das ganze Dokument * * Absätze [0002], [0009], [0011] - [0014], [0017] - [0022] * * Abbildung 1 * ----- | 1-7 | INV. F01D21/00 G01H1/00 |
| X | US 2010/127694 A1 (WEICKERT JOHN [US]) 27. Mai 2010 (2010-05-27) * das ganze Dokument * * Absätze [0002], [0003], [0019] - [0021] * * Abbildungen 1,4 * ----- | 1-3,6,7,10 | |
| X | DE 10 2008 057556 A1 (MTU AERO ENGINES GMBH [DE]) 20. Mai 2010 (2010-05-20) * das ganze Dokument * * Absätze [0005], [0006], [0029] - [0038], [0045] - [0047] * * Abbildung 1 * ----- | 1,3-7 | |
| X<br>A | US 2004/060371 A1 (BARKHOUDARIAN SARKIS [US]) 1. April 2004 (2004-04-01) * das ganze Dokument * * Absätze [0028] - [0031], [0035] - [0038], [0046], [0054], [0058] * * Abbildungen 1-5 * ----- | 1-3,5<br>6 | RECHERCHIERTE SACHGEBIETE (IPC)<br><br>F01D G01H G01N G01R |
| X<br>A | US 4 934 192 A (JENKINS MAURICE A [US]) 19. Juni 1990 (1990-06-19) * das ganze Dokument * * Spalte 3, Zeile 11 - Spalte 4, Zeile 32 * * Spalte 5, Zeilen 20-50 * * Abbildungen 1-7 * ----- -/-- | 6,7<br>1 | |

Der vorliegende Recherchenbericht wurde für alle Patentansprüche erstellt

| Recherchenort | Abschlußdatum der Recherche | Prüfer |
|---|---|---|
| Den Haag | 9. April 2013 | Gombert, Ralf |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

Europäisches
Patentamt

European
Patent Office

Office européen
des brevets

**EUROPÄISCHER RECHERCHENBERICHT**

Nummer der Anmeldung

EP 12 19 0744

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 4 951 500 A (TWERDOCHLIB MICHAEL [US] ET AL) 28. August 1990 (1990-08-28) | 6,7 | |
| A | * das ganze Dokument * <br> * Spalte 3, Zeilen 4-59 * <br> * Spalte 4, Zeilen 54-66 * <br> * Abbildungen 1-4 * <br> ----- | 1 | |
| A | EP 1 538 448 A1 (WESTON AEROSPACE LTD [GB]) 8. Juni 2005 (2005-06-08) <br> * das ganze Dokument * <br> * Absätze [0012], [0015], [0017], [0018] * <br> * Abbildungen 3,6,8,10 * <br> ----- | 1-10 | |
| A | US 7 023 205 B1 (KRUPP ROY S [US]) 4. April 2006 (2006-04-04) <br> * das ganze Dokument * <br> * Abbildungen 1-4 * <br> ----- | 1-10 | |

RECHERCHIERTE
SACHGEBIETE (IPC)

Der vorliegende Recherchenbericht wurde für alle Patentansprüche erstellt

| Recherchenort | Abschlußdatum der Recherche | Prüfer |
|---|---|---|
| Den Haag | 9. April 2013 | Gombert, Ralf |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
.................................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**          EP 12 19 0744

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-04-2013

| Im Recherchenbericht angeführtes Patentdokument | Datum der Veröffentlichung | Mitglied(er) der Patentfamilie | Datum der Veröffentlichung |
|---|---|---|---|
| EP 2312410 A1 | 20-04-2011 | CZ 303476 B6<br>EP 2312410 A1 | 10-10-2012<br>20-04-2011 |
| US 2010127694 A1 | 27-05-2010 | KEINE | |
| DE 102008057556 A1 | 20-05-2010 | CA 2740101 A1<br>DE 102008057556 A1<br>EP 2294287 A2<br>US 2011213569 A1<br>WO 2010054644 A2 | 20-05-2010<br>20-05-2010<br>16-03-2011<br>01-09-2011<br>20-05-2010 |
| US 2004060371 A1 | 01-04-2004 | KEINE | |
| US 4934192 A | 19-06-1990 | CA 1311030 C<br>CN 1039482 A<br>ES 2014755 A6<br>IT 1233107 B<br>JP H0264206 A<br>US 4934192 A | 01-12-1992<br>07-02-1990<br>16-07-1990<br>14-03-1992<br>05-03-1990<br>19-06-1990 |
| US 4951500 A | 28-08-1990 | KEINE | |
| EP 1538448 A1 | 08-06-2005 | CA 2488967 A1<br>EP 1538448 A1<br>GB 2408802 A<br>US 2005127905 A1 | 03-06-2005<br>08-06-2005<br>08-06-2005<br>16-06-2005 |
| US 7023205 B1 | 04-04-2006 | KEINE | |

EPO FORM P0461

Für nähere Einzelheiten zu diesem Anhang : siehe Amtsblatt des Europäischen Patentamts, Nr.12/82